# EUROPEAN PATENT SPECIFICATION

(11) **EP 3 708 480 B1**
(45) Date of publication and mention of the grant of the patent: **18.05.2022**
(21) Application number: 19214589.4
(22) Date of filing: 17.03.2014
(51) Int. Cl.: B63H 11/08, B63H 11/113, B63H 11/117, F01N 3/00

(54) **MARINE DUCTED PROPELLER JET PROPULSION SYSTEM**
STRAHLANTRIEBSSYSTEM MIT EINEM DÜSENPROPELLER FÜR WASSERFAHRZEUGE
SYSTÈME MARIN DE PROPULSION PAR JET D'HÉLICE À CONDUIT

(30) Priority: 15.03.2013 US 201361799274 P
(43) Date of publication of application: 16.09.2020
(62) Divisional of application: 14764267.2
(73) Proprietor: Broinowski, Stefan, Lausanne, Canton Vaud 1006 (CH)
(72) Inventor: Broinowski, Stefan, Lausanne, Canton Vaud 1006 (CH)
(74) Representative: De Lorenzo, Danilo

(56) References cited:
- US-A- 3 756 185
- US-A- 4 026 235
- US-A- 4 182 118
- US-A- 6 027 383
- US-A1- 2003 194 925
- US-A1- 2005 142 001

## Description

### FIELD OF THE DISCLOSURE

The present disclosure relates to exemplary embodiments of a marine ducted propeller jet propulsion apparatus, and more particularly, to exemplary embodiments of an impeller assembly and ducted design for a marine ducted propeller jet propulsion unit.

### BACKGROUND INFORMATION

The use of jet propulsion devices for marine craft is well known technology. Examples of marine ducted propeller jet propulsion systems can be found in US 6027383 A and US 2003/194925 A1. Jet propulsion has many advantages over the simple propeller, particularly in terms of shallow water, maneuverability, though jet propulsion energy consumption is much less efficient than traditional propeller systems. However, widespread acceptance of jet propulsion for marine craft has not occurred because of certain common problems associated with marine jet propulsion. For example, marine jet propulsion poses significant design problems because of uncertain performance over a wide range of speeds, water depth, sea conditions, excess water pickup at the jet propulsion unit inlet that may cause balling, etc.

Cavitation is another common problem. Cavitation represents an uneven pressure load (net positive suction head) on the impeller. Cavitation can be produced by excessive radial acceleration of the fluid, excess swirl and turbulence of the fluid column, and pressure changes that cause unintentional partial vaporization of the fluid throughput associated with a vacuum produced by impeller action.

Accordingly, it would be desirable to design a jet propulsion unit for marine vessels where each feature synergistically works together to provide for a constant column of water even at high output and where the water throughput is neither turbulent nor swirling in order to eliminate cavitation and pressure changes effects. Furthermore, the unit should have maximum flexibility to cope with the entire speed range of the marine vessel and varied loading on the unit of its prime mover without producing the above-mentioned balling and cavitation effects.

### SUMMARY

A jet propulsion unit for a marine vessel as defined by the appended claims.

### BRIEF DESCRIPTION OF THE DRAWINGS

The foregoing and other objects of the present disclosure will be apparent upon consideration of the following detailed description, taken in conjunction with the accompanying drawings and claims, in which like reference characters refer to like parts throughout, and in which:
Figure 1 is an illustration of a marine ducted propeller jet propulsion apparatus according to an exemplary embodiment of the present disclosure;
Figure 2 is an exploded view of a marine ducted propeller jet propulsion apparatus according to an exemplary embodiment of Figure 1;
Figure 3 is an exploded view of a marine ducted propeller jet propulsion apparatus according to an exemplary embodiment of Figure 1;
Figure 4 is an exploded view of a marine ducted propeller jet propulsion apparatus according to an exemplary embodiment of Figure 1;

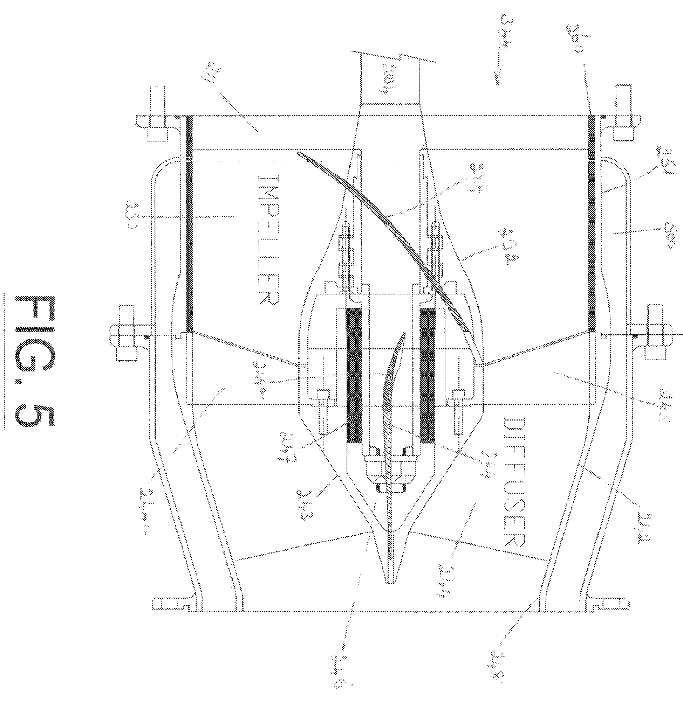

Figure 5 is an illustration of an impeller and a diffuser for a marine ducted propeller jet propulsion apparatus according to an exemplary embodiment of Figure 1;

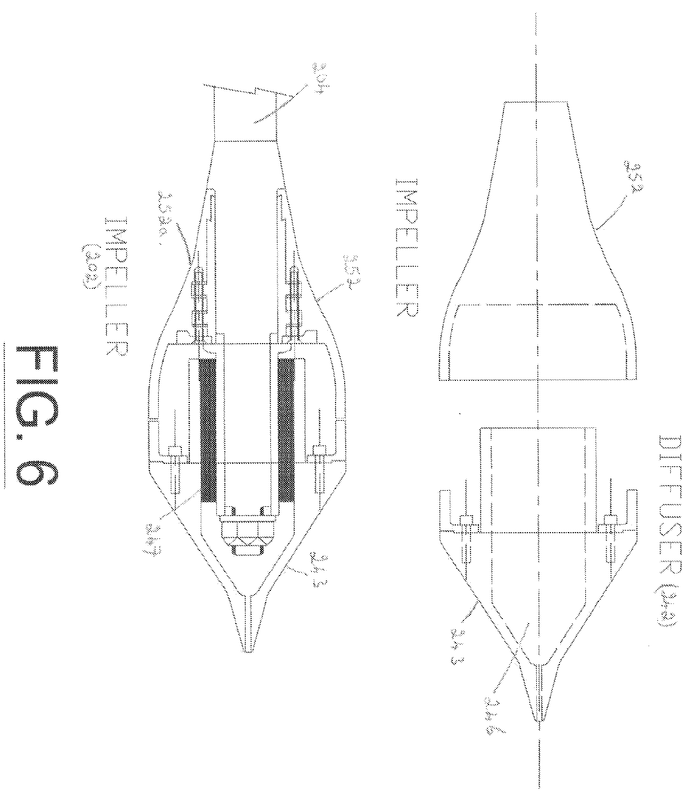

Figure 6 is an illustration of an impeller hub and a diffuser hub for a marine ducted propeller jet propulsion apparatus according to an exemplary embodiment of the present disclosure;
Figure 7 is various views of an impeller for a marine ducted propeller jet propulsion apparatus according to an exemplary embodiment of the present disclosure;

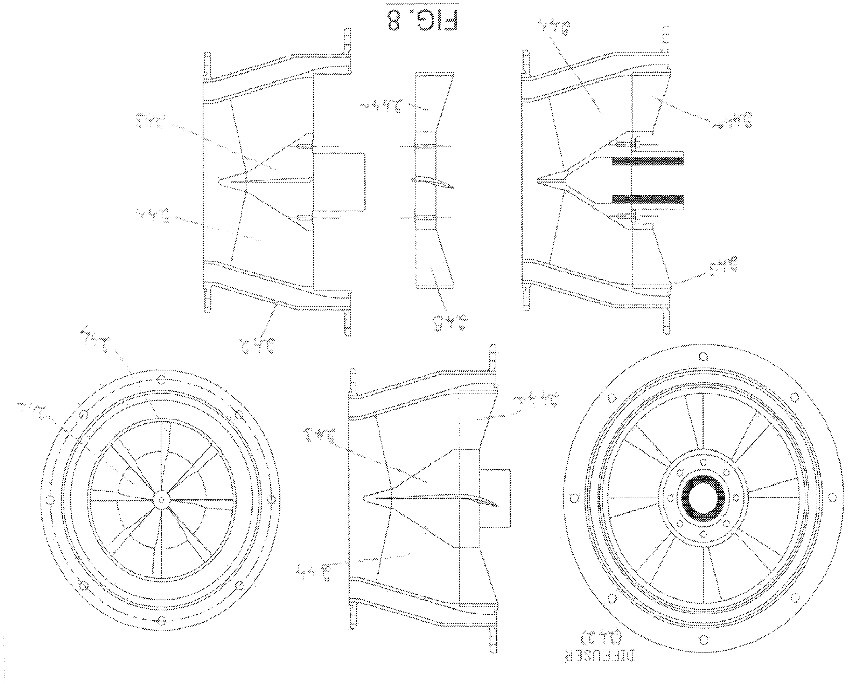

Figure 8 is various views of a diffuser/confusor for a marine ducted propeller jet propulsion apparatus according to an exemplary embodiment of the present disclosure;
Figure 9 is an illustration of a marine ducted propeller jet propulsion apparatus according to an exemplary embodiment of the present disclosure; and
Figure 10 is various views of trim for a marine ducted propeller jet propulsion apparatus according to an exemplary embodiment of the present disclosure.

Throughout the figures, the same reference numerals and characters, unless otherwise stated, are used to denote like features, elements, components or portions of the illustrated embodiments. Moreover, while the subject disclosure will now be described in detail with reference to the figures, it is done so in connection with the illustrative embodiments.

### DETAILED DESCRIPTION

Exemplary embodiments of the methods and systems of the present disclosure will now be described with reference to the figures. U.S. Patent Application Numbers 5,123,867 and 6,027,383 also describe conventional jet propulsion units.

The present disclosure provides a propulsion system that substantially enhances propulsive efficiency. The efficiency can be obtained by (1) converging a passing water mass on a volumetric basis as exhibited by fluid flow through a nozzle and (2) accommodating the mass of the internal workings of the system volumetrically in the flow volume thereby enhancing the convergent properties given by the housing to the flow. In use, an axial cross-sectional flow area substantially and regularly decreases from the inlet to the outlet without resistance of the mass of the internal working representing a restriction or obstruction to the flow. Also, a use of a volumetric nozzle design in the present disclosure reduces turbulence and enhances solid plug-flow or solid state character of the water stream more efficiently.

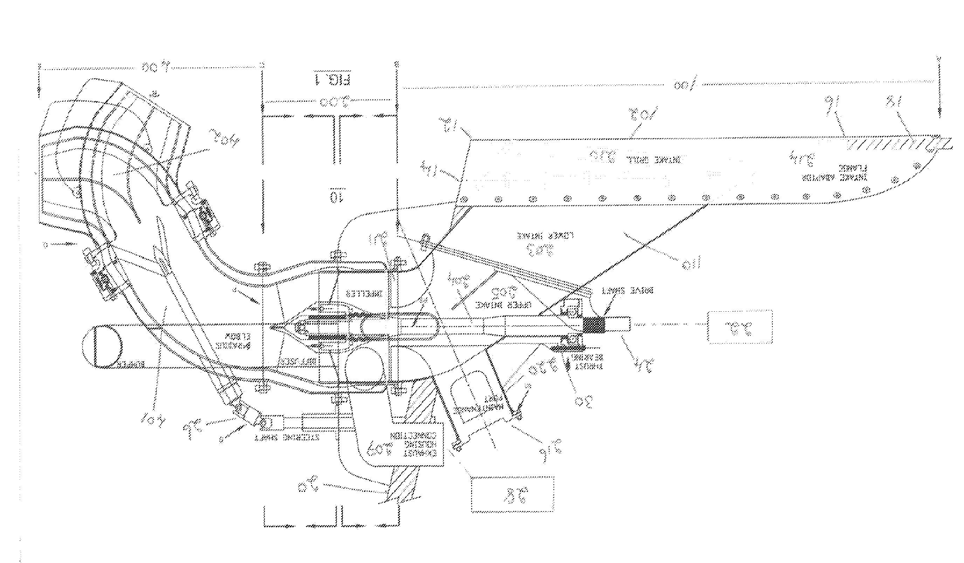

1. Figure 1 illustrates a diagram of a marine ducted propeller jet propulsion apparatus 100 that has an encased exhaust housing 1. The heat of the engine exhaust can heat the housing of the diffuser and steering nozzle assembly, which in turn can improve the Coefficient of Viscosity by up to by heating the inner walls of the flow control housing. This can impart heat to the water, reducing the drag coefficient of the surface of the housing material and increasing flow viscosity. A benefit of the exhaust exiting around the nozzle efflux can be that it provides a pocket of exhaust for the exiting column, reducing the drag losses of the column hitting solid water and improving the reactionary effect of the potential energy in the column to kinetic energy or thrust.

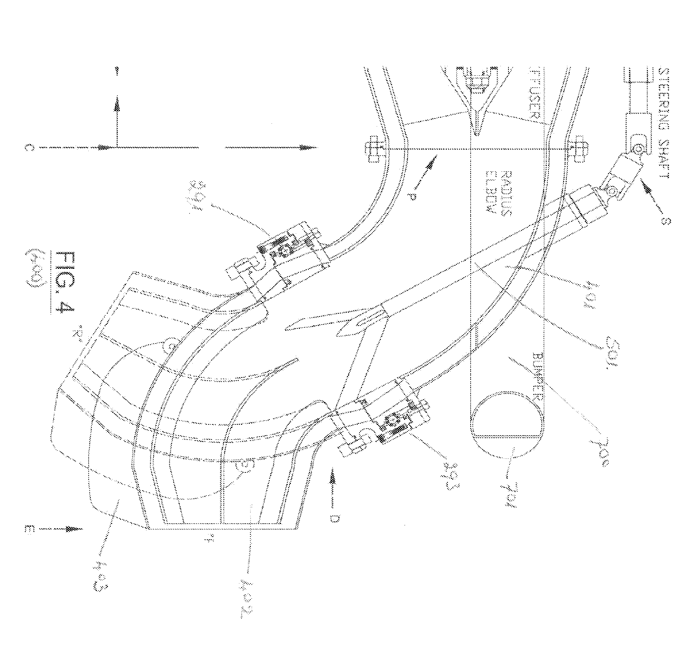

Referring to Figures 1 and 4, the propulsion system 10 functions similarly to an axial flow, positive head pump or turbine pump having an intake section 100 extending between lines A-A to B-B, an impeller section 200 extending between lines B-B to C-C and a discharge section 400 between lines C-C to E-E. A water column induced into inlet passage 102 by atmospheric pressure is energized and accelerated through the discharge section 400 to provide thrust for craft 12.

The marine craft 12 has the ducted propeller jet propulsion system 10 installed in a rear section 14 so that the intake section 100 of the propulsion system 10 is incorporated into the bottom hull 18 using the adapter plate 16 and the discharge section 400 of the propulsion system 10, supported by transom 20, extends out a rear of the boat 12 in place of an ordinary propeller. The propulsion system 10 is shown diagrammatically in two of its thrust positions: F - the forward propulsion position and R - the reverse propulsion position. A prime mover 22 is directly attached to an impeller shaft 24 and a steering linkage 26 is attached to a steering module 28 of the propulsion unit 10.

An interchangeable thrust bearing assembly 30 also provides for the thrust bearing to be changed in position whether the vessel 12 is in the water or not by disconnecting a drive coupling positioned at the end of a drive shaft and removing the securing bolts, which then allows the interchanging of the shaft thrust bearing assembly 30. The thrust bearing assembly 30 is designed to be self-greasing to ensure that the bearings and seals are always lubricated.

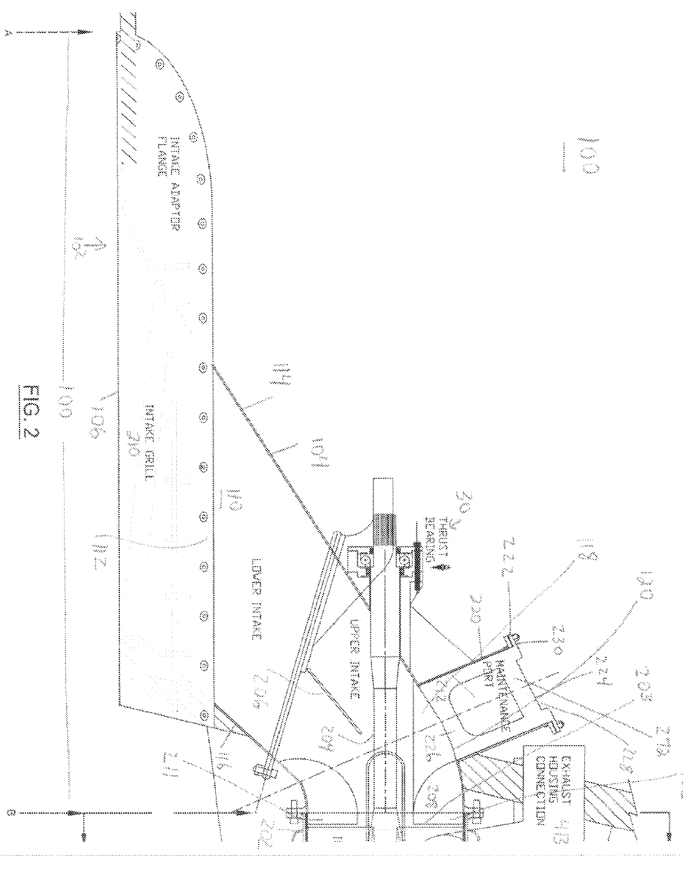

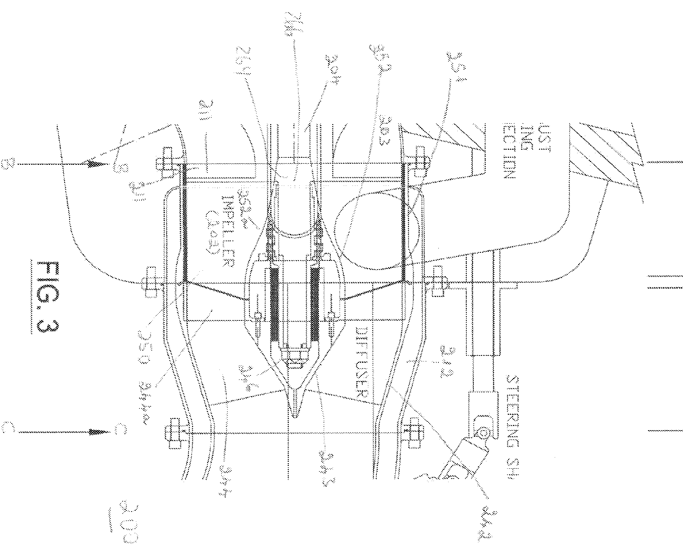

As shown in Figures 2 and 3, the intake section 100 more particularly defines an intake passage 102 in a housing 104 communicating between an intake opening 106 formed in a bottom surface of the hull at one end, and an impeller intake 203 to the impeller section 200 at the other end. Passage 110, initially rectangular or elliptic, transitions to a circular shape in a manner to control the convergences of the flow to the face of impeller 202 and to enhance the flow characteristics. As shown in Fig. 2, the passage 110 can include two vertical walls 112, a long sloping wall 114, and a short sloping wall 116 converging onto a cylindrical chamber 118 at bend 120. Following bend 120, passage 122 is cylindrical. Converging walls of the passage 122 are suitably smoothed and rounded at places of intersection to facilitate flow without turbulence. Typically, the angle of bend 120 varies from, but is not limited to, about 30 to about 45 degrees depending on specific design requirements and also can be adjusted to accommodate the volumetric mass of the internal working parts of the impeller intake 203.

As shown in Fig. 2, the impeller intake 203 can include shaft 204, guide vanes 206 and directional vanes 208, while maintaining a Reynolds Number (Re) between 2300 and 4000 but typically closer to 2300. The cross-sectional area of intake 203 is preferably proportional to the cross-sectional area at inlet 102 to an impeller 202 at a ratio varying from about 1.5 to about 2.5:1 and also can be adjusted to include the volumetric insertion in the flow of the mass of the drive shaft 204, straightener vanes 206 and directional or pre-swirl vanes 208 by increasing the external dimensions accordingly.

The internal flow characteristic of the upper and lower intakes, 110 and 203, can accommodate the intake grill 210, shaft 204, guide vanes 206 and directional or anti-pre-swirl vanes 208, by cross-sectionally adjusting the shape of the intake transition from the intake entrance to the impeller face to ensure that the convergent flow through the intake 203 to the impeller 202 is uninhibited. Not doing so can create a flow restriction, which can induce a pressure change in the flow to the impeller 202 (shown in Figure 4 in more detail), which can induce aeration in the flow, pressure change and cavitation.

Situated along the intake walls of inlet housing 104 in front of the impeller 202 is a straight tube section 211 of a minimum length equal to 20% of the impeller blade width adjusted to accommodate the volumetric mass of the internal working parts within its parameters where the flow with one or more straightener vanes 208 is induced to flow in a solid state to the face of the impeller 202. Other directional vanes 206 are spaced radially along the side surfaces of inlet housing 104 so that equal volumes of water may be directed through the straightener vanes 208 to the periphery of the impeller 202. Vanes 208 minimize radial loads on the impeller 202 for optimized flow efficiency so the fluid is presented to the face of the impeller 202 in a solid state. The vanes 208 also act to dampen any preliminary pre-rotation or turbulence in the inlet water column to the impeller 202. It is important that the internal flow characteristic of the intake 203 accommodates the volumetric intrusion of the straightener and directional vanes 206, 208 by cross-section adjustment to the shape of the intake transition from the intake 203 to the impeller face to ensure that the flow through the intake to the impeller 202 is volumetrically uninhibited or restricted. Not doing so can create a flow restriction which can induce a pressure change in the flow to the impeller 202 which can induce pressure changes and aeration in the flow and cavitation.

Within passage 102 an intake grill 210 is disposed adjacent the hull opening. The mass of this grill 210 will be volumetrically displaced in the intake passage 102 so as not to present a restriction to incoming flow. If this is not done the flow will suffer a low pressure drop on the intake side of the grill 210 causing turbulent flow or aerated liquid of a reduced pressure to be presented to the face of the impeller 202. This will induce cavitation from the face of the impeller along its blades widths. Grill 210 is typically a span of parallel bars disposed lengthwise of the hull 18 angled down and to the rear of the intake housing 104. The bars of grill 210 have streamlined or hydrofoil cross-section in the direction of the incoming stream to create minimal resistance to water flow. The spacing between bars of grill 210 should preferably not exceed the spacing between diffuser vanes so that the largest objects entering the impeller 202 may pass through the diffuser vanes.

An induction plate of the intake system 100 can be adjusted by design to accommodate hull dead rise variations to ensure the smooth entry of solid state water into the intake 110 at the correct angle and flow proportions to maximize the solid state flow input velocities to the impeller 202. This part also works in conjunction with the intake pressure release by-pass valve by assuring the pressure build up in front of the impeller 202 does not exceed its designed needs or induce drag under the hull by creating a back-up pressure back down the intake. This release pressure has been determined by testing to be in the range between 3 to 6 psi.

The variable sized intake section 203 can be provided in different sizes to allow the installation of the propulsion system 10 to be adapted to any type of vessel regardless of its hull shape, size or dead rise or speed and will connect to the upper intake section 205 by means of a coupling or bolt assembly. The inlet section 200 is installed in the rear section of the hull so that forward motion of the vessel and subsequent elevation off the surface of the water, in the case of planning hulls, enables the intake section 200 to be positioned slightly below the water level of the craft hull. However, for proper operation at rest or at low speed, the unit 10 should be installed so that at least about 60 to 80 percent of impeller 202 cross-sectional area is submerged. Intake section 203 is bolted, for example, to the hull by means of a flange.

If fouling inside housing 104 occurs, an arm-hole duct 216 is provided to enable quick access to passage 212. Duct 216 is situated at bend 120 and comprises a cylindrical housing 220, with an outer flange 222 and a plug 224. Plug 224 is provided with a solid section 226 affixed to a flanged cover 228 which completely fills the duct housing 220. Section 226 is provided with a smooth contoured surface that matches the surface section removed from the upper intake housing 104 in bend 120 when duct 216 is installed. Duct 216, when properly plugged in position, poses no flow disruption. Flange 222 is provided with upstanding threaded bolts 230 which are inserted into bolt holes in flange 222 so that plug 226 may be properly aligned when installed. Handle 232 attached to cover 228 provides additional alignment indicia. A sensor can be positioned between the flange 222 and duct 216 to activate an engine shut-off mode if there is an attempt to remove the plug 224 when the prime mover 22 is running.

A bypass valve assembly (not shown) can also be fitted in housing 104 near inlet 203 shown in FIGS. 1 and 2. Excess water is bled through bypass valve assembly (not shown) if water pressure between the hull of the vessel 12 and the induction inlet 106 exceeds handling capacity exceeds 3 to 6 psi. Excess water buildup, known colloquially as balling, is a common occurrence in marine jet propulsion units. Occurring at high vessel speeds when the vessel is undergoing sharp maneuvers and/or during rough sea conditions, excessive balling introduces a drag characteristic upon the hull of vessel 12 and affects the propulsive efficiency of unit 10. The valve assembly (not shown) functions as an anti-balling device to relieve pressure. It is now known that this pressure should not exceed 3 to 6 psi. The intake pressure release by-pass valve 232 can work in conjunction with the induction plate by allowing for excessive pressure build up in front of the impeller 202 to be released around the impeller into the exhaust heat exchanger 207. The pressure by-pass valve pressure release valve (not shown) can be set to the desired pressure release as may be needed subject to sea conditions or the work load of the vessel to improve unit performance. This is controlled automatically by pressure sensors attached to the side of the housing 104 that relay the running pressure before the impeller 202 so the valve can be adjusted by a programmable controller (not shown). To not have the pressure release ability can lead to incidents of pressure build up in front of the impeller 202 and down the intake causing a drag effect at the intake entrance and further affecting the characteristics of the host vessel. The flow emanating from the by-pass valve (not shown) will exit into the propulsion system exhaust housing 207.

The impeller section 200 of the present invention, as seen in Figures 1 and 3, from line B-B to line C-C, is shown to incorporate a single stage impeller 202. The impeller assembly 200 comprises a removable housing 236 made up of two smaller sections, an impeller housing 251 and a diffuser/confusor housing 242 having impeller 202 and diffuser/confusor 242. Impeller housing 251 is cylindrical with a generally uniform diameter at the inlet port 344 and discharge port 346. Diffuser housing 242 is cylindrical with an inside surface tapered inwardly from a maximum diameter adjacent the impeller section 200 to a minimum diameter adjacent the discharge section 400. The convergent inside surface of impeller housing 240 has an outlet cross-sectional area preferably proportional to the impeller section intake cross-sectional area at a ratio varying from about 0.5 to 0.75:1 adjusted to accommodate the volumetric mass of the internal working parts of the impeller 202 being the blades 250 and hub 252. The preferred ratio is about 0.60 to about 0.70:1, adjusted to accommodate the volumetric mass of the internal working parts of the impeller being the blades and hub, and optimally about 0.64:1, so that volumetric displacement of diffuser/confusor housing 240 is less than volumetric displacement of impeller section 200. Volumetric displacement of the diffuser section is from about 75 to about 90 percent adjusted to accommodate a volumetric mass of the internal working parts of the impeller being the blades and hub, preferably from about 80 to about 90 percent adjusted to accommodate the volumetric mass of the internal working parts of the impeller being the blades and hub of the volumetric displacement of the impeller section and optimally about 85 percent adjusted to accommodate the volumetric mass of the internal working parts of the impeller being the blades and hub. Furthermore, the annular flow channel provided by the axial impeller/diffuser/confusor hub combination in the impeller housing has smooth substantially contiguous inner and outer surfaces for preventing turbulent boundary eddies. An important design criterion of impeller section 200 is that the cross-sectional area of the impeller housing 251 and diffuser housing 240 should be the same at the junction point.

With particular regard to the individual parts of impeller section 200, the impeller assembly 202 has a unique design having previously undergone much testing and modifications as to both the shape of a hub portion 252 and impeller blades 250. The interchangeable blade assembly impeller makes it possible to easily replace individual impeller blades 250 on the impeller 202 if damaged, or to change the pitch of the impeller 202 for different applications. An essential aspect of impeller 202 is that impeller blades 250 are fixed along an outwardly tapered convex surface of the detachable hub portion 252 rather than a flat section as is typical in the prior art impeller design.

Assembled impeller hub 252 has preferably an outwardly tapered convex surface, and annular interior, more preferably, hub 252 has an outer surface comprising a concave portion and a convex portion when viewed in axial cross-section and an annular interior. Assembled hub 252 has an outer surface with a narrow diameter leading end, an increasing variable diameter mid-portion and a large diameter trailing end. Distal end of shaft 204 extends through a concentric axial bore 266 the length of hub 252. Leading end has an annular end surface abutting a shoulder 264 on shaft 204 to present a smooth, continuous surface for fluid flow. Annular walls of assembled hub 252 arc substantially of constant thickness except for a distal annular end extending outwardly from bore 266 providing an engageable surface blade section retainer and for a locking sheath.

Impeller 202 has blades 250 attached along the contoured surface of hub 252 at an inclination designed to maximize blade exposure to the passing fluid and reduce radial acceleration component imparted by impeller 202. Blade 250 has a convex outer radius 272, a concave inner radius 274, a short trailing edge, a long leading edge, broad surface sides having a midpoint, and thickness.

The inclination of impeller blades 250 is defined as an average inclination or degree of twist in the length of blades 250 as determined from the perpendicular with respect to a line tangent to the outer surface of the assembled hub 252 at the leading edge and at the trailing edge. When viewed along either the inner radius 274 or outer radius 272 or when viewed down either leading or trailing blade edge, an average angle of inclination of both leading or trailing edges is preferably in a range from about 20-40 degrees off the perpendicular, more preferably about 30 degrees off the perpendicular with one edge inclined opposite the other as required by blade 250 to follow hub 252 surface contour. The leading edge is twisted into the direction of the advance of the impeller 202. It will be appreciated the leading edge corresponds to the leading end of hub 252 which has a narrow diameter and the trailing edge corresponds to the trailing end of hub 252 and that the mid-section radial width of blade 250 is a function of the radius of mid-section portion of hub 252 so that impeller diameter is substantially constant. The overall length of blade 250 is equal to the length of assembled hub 252 plus the angular component.

In a radial direction the thickness 284 of blade 250 is low profile foiled in design as a result of improved design instead of substantially uniform as in previous defined. Leading edge has substantially uniform tapering with a maximum thickness at a midpoint approximately equidistant from either edge. The leading edge entry angle needs to be between 13 and 15 degrees related to the rotary velocity of the impeller 202.

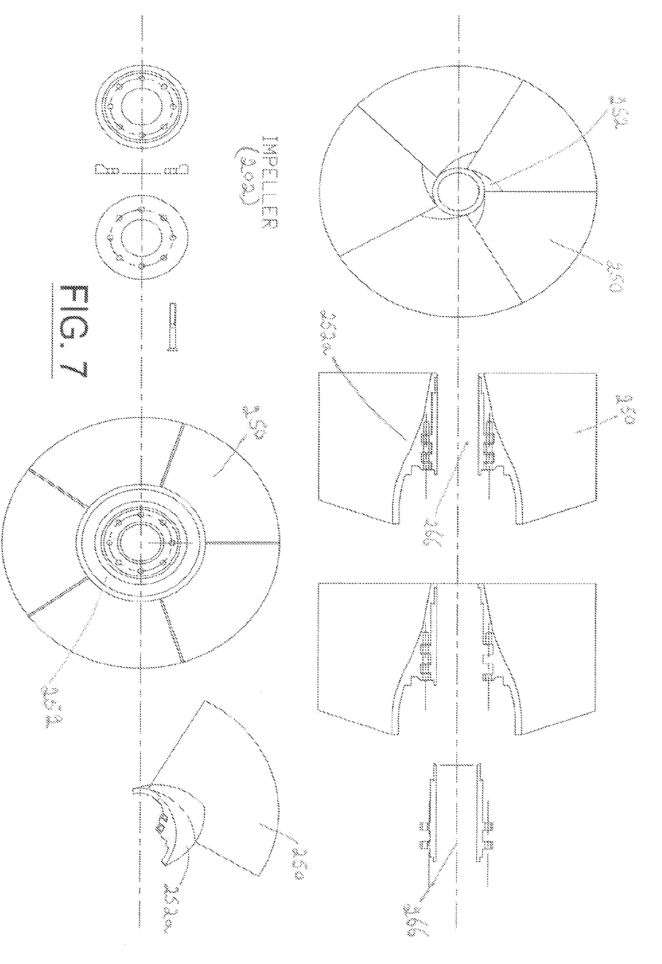

FIG. 7 shows a typical fan of five blades extending along assembled hub 252. The number of blades, impeller diameter and degree of inclination may be optimized in relation to the power supplied by prime mover 22 and the required design consideration of the vessel at hand.

The internal flow characteristic of the impeller housing 251 can accommodate the volumetric displacement of the impeller blades 250 and hub 252 by cross section by adjusting the shape of the impeller housing 251 and the dimensions of the impeller hub 252. This will allow the transition of the flow from the intake 203 through the impeller 202 to the diffuser/confusor 242 to be without restriction, and maintain the correct flow volume velocities to the steering nozzle 400. Not doing so can create a change in the flow characteristic through the system, resulting in cavitation at the leading edge of the impeller blades or an induced pressure change in the flow to the diffuser/confusor and into the steering nozzle assembly 400, which can induce turbulent flow or flow choke and a resulting back pressure reducing efficiency and eventually causing a hydraulic brake effect.

The pitch effect of the impeller blade(s) 250 on the accelerated flow can be enhanced by the extension of the blade width beyond the required pitch length by adding a continued parallel section to end of the assembly impeller hub 252 and to the width of the blades representing a continuation of the exiting pitch of the blade 250. The designed pitch of the impeller blade 250 can be a combined interpretation of the required efflux velocity efficiency and the power available from the power source driving the impeller 202. This power source can be from any type of drive, whether it is electric, gasoline, diesel, gas or alternative fuel driven. The effect of the added blade width can work with the interchangeable diffuser blade component to enhance the efficiency transfer of the rotating exiting flow velocities of the back of the impeller blades 250 to linear, laminar type flow through the diffuser 242 on to the steering nozzle assembly 400. Similar to the ability to match traditional propellers to the needs of a vessel by adjusting the diameter to pitch ratios, the adjustment of the extension of the added blade width provides an ability to enhance the performance and efficiency of the impeller output against the drive. The internal flow characteristic of the impeller housing 251 can accommodate the volumetric displacement of the impeller blades 250 and the added pitch extension by cross-section by adjusting the impeller housing diameter or by adjustment of the impeller hub displacement in the flow volume. This can allow the transition of the flow from the intake through the impeller 202 to the diffuser 242 to be without restriction and maintain the correct flow volume and velocities through the diffusor/confusor 242 on to the steering nozzle 400. Not doing so can create a change in the flow characteristic through the system resulting in a drop in propulsive efficiency proportional to the inconsistency eventuating, at an expediential rate, in system failure.

A durable plastic removal and replaceable impeller wear sleeve 260 can be provided to stop wear and tear to the impeller housing 251. The clearance dimension between the blade tips and the internal wall of the removal and replaceable impeller wear sleeve is critical and should be no more than and no less than touch contact.

The internal flow characteristic of the diffuser/confusor housing 242 can accommodate the volumetric displacement of the blades of the diffuser 242 and hub 243 by cross section by adjusting the shape of the diffuser/confusor housing 242 This can allow the transition of the flow off the back for impeller blades 250 through the diffuser 242 to the upper nozzle of the nozzle assembly 400 to be without restriction and maintain the correct flow volume and velocities to the upper steering nozzle 401. Not doing so can create a change in the flow characteristic through the system resulting in turbulent flow or flow choke with resulting back pressure. This can lead to cavitation at the leading edge of the impeller blades 250, which can induce expediential pressure change in the flow to the diffuser and on to the steering nozzle assembly 401 resulting in reduced efficiency and eventual system failure.

The interchangeable diffuser/confusor blade component 245 can allow for the changing of the leading edge blades to the diffuser 242 to be replaced if damaged, or to change the pitch of the leading edge of the diffuser vanes 244a if they need to be adjusted to meet the needs of the trailing edge velocities of the impeller 202 or a change in pitch of the impeller blades 250.

The radii of the leading edge of the diffuser blades 244 to their straight trailing section can be of a greater radius than in previous designs to ensure a less turbulent transition of the flow from the impeller blade 250, which can allow the change from rotary flow to linear/laminar type flow to be less aggressive reducing turbulent flow. The entry angle of the diffuser/confusor vane 244 needs to correspond to the velocity of the flow of the trailing edge of the impeller 202 trailing edge. The leading radius of each blade can extend to approximately half way down the diffuser/confusor blade length. The change in radius and the resulting change in blade shape can be incorporated in the volumetric flow characteristics of the diffusor/confusor housing's internal flow characteristics and/or the hub supporting the diffusor vane 244 supporting in a more precise convergent flow effect on the ensuing flow characteristic than was attainable previously.

The exit radius 246 to the diffuser/confusor 242 can be adjusted to be increased. The sharp angled transition from the diffuser/confusor exit to the steering nozzle assembly 400 can cause inducement of flow turbulence as the flow transitions from the diffuser/confusor 242 to the steering control nozzle assembly 400. This sharp and sudden change in angle, as shown in U.S. Patent Nos. 5,123,867 and 6,027,383, induces flow turbulence at higher flow velocities at the diffuser exit restricting flow and creating back pressure, which can affect the efficiency of the impeller 202 by presenting a resistance to the flow off the back of the impeller blades 250. Increasing this radius provides for the reduction of the acceleration of the flow in proportion to the constant velocity acceleration imparted to the flow by the impeller 202 under power and the convergent flow characteristic provided by design. The flow needs to be controlled through the expediential flow acceleration without the flow becoming turbulent in nature, which causes the turbulence, which induces back pressure. By introducing a radius at the transition point from the diffuser/confusor 242 to the steering control nozzle assembly 401, the reduction of turbulent flow has been discovered to be reduced expedientially and proportionally to the increase of the radial length of the provided radius at the points of contact of the diffuser/confusor 242 and the steering control nozzle assembly 400.

The diffuser/confusor 242 is disposed immediately adjacent the impeller 202 and is designed to work in conjunction with impeller 202 to achieve several important performance functions: (1) damping a radial acceleration component imparted by the impeller 202; (2) diffusing the path of the water throughput across the entire impeller area cross-scction; (3) preventing partial vaporization of the passing fluid resulting from a vacuum associated with impeller action by providing a low artificial back pressure upon impeller 202; and (4) allowing maximum reaction of the impeller 202 and permitting more efficient transfer of the prime movers 22 available energy into potential energy. Any degree of vapor present would introduce uneven loading on impeller 202 and cavitation. These performance functions are improved by the volumetric flow characteristic of the diffusor/confusor 242 being adjusted to accommodate the volumetric mass of the internal working parts of the diffusor/confusor 242.

The diffuser/confusor hub 243 preferably has an inwardly tapered convex surface and annular interior, oppositely disposed in relation to hub impeller 252. Hub 243 comprises a large flat diameter leading end, decreasing variable diameter mid-section and a small diameter trailing end forming a rounded nose with a concentric bore cavity 246 drilled through the middle thereof and a central annular end extension. Concentric outer annular cavity 246 is primarily for reduction of excess weight providing hub 252b with walls of substantially constant thickness. A concentric inner annular bore 246 defines a cylindrical housing for a support bearing for impeller shaft 204 supporting impeller 202.. Bore 246 has a reduced diameter in the nose section of hub 243 as required by design strength criteria.

The diffuser/confusor blade design is typically based upon standard straight vane design except for significant changes incorporated into vanes 244 associated with the surface contour of diffuser hub 252b. The vanes 244 have a radial width which is a function of a diameter of hub 243 so that the diffuser 242 has a constant diameter. The thickness of each vane 244 may be airfoil shaped or typically may have uniform thickness throughout except for an edge side which may be blunted or sharpened as design fine-tuning requires. Vanes 244 have an interchangeable leading edge port of interchangeable section 245 which is curved in a direction opposite the directional advance of the impeller 202 and a straight section which is typically perpendicular to the hub surface, yet may also be inclined at an angle of up to about 10 degrees off an orthogonal plane bisecting the hub 243 at point of juncture and opposite the directional advance of the impeller 202 depending on performance fine-tuning. The curved end of the removable diffusor/confusor blade section is typically inclined at an angle of about 10 to about 40 degrees off a longitudinal plane bisecting the hub 243 a of the interchangeable blade section and incorporating straight portion. The vanes 244 are securely affixed lengthwise on one end to the contour surface of hub 243 and on the other to the inside walls of housing and provide girding support for the bearing function of hub 243. The number of diffuser/confusor vanes 244 is selected with respect to the number of impeller blades 250 in such a relation that the performance criteria of the diffuser/confusor section e.g. provides back-pressure and such that damping of radial acceleration is achieved and that resonance and noise levels arc minimized. In an important design feature, the ratio of impellers blades to diffuser/confusor vanes is odd:even or vice versa. For example, given 3, 5, or 7 impeller blades the corresponding number of diffuser vanes would preferably be 6, 8, or 10.

Overall, the diffuser/confusor 242 is designed to control the shape of water flow and corresponding acceleration over a large pressure differential presented by a wide range of vessel speeds, maneuvers and sea conditions.

The impeller assembly 200 is axially symmetrically disposed in the cylindrical impeller housing 251 with the diffuser/confusor apparatus 242 attached rearward of the impeller apparatus 202 in close proximity. The outer surface of trailing end on rotatable hub 252 is substantially continuous with the outside surface of leading end on fixed hub 243. Impeller assembly 200 is so arranged to make this assembly simple and quick and to enable mating of the impeller 202 and matched diffuser 242 to prime mover 22 and craft design requirements. Impeller housing 251 may have a replaceable sleeve enabling the diameter of housing be reduced corresponding to reduction of impeller diameter. Thus a smaller diameter impeller arrangement can be used for smaller boats. There is, however, no limitation regarding horsepower or vessel size and propulsion system 10 may have proportionally expanded capacity for large ships or for greater speeds.

Impeller shaft 204 extending axially through propulsion system 10 is provided with a first bearing support by interchangeable bearing assembly 30 mounted on inlet housing 203 and a second bearing support 247 at fixed hub 243. Bearing assembly 30 includes housing, roller bearing and locking ring. Bearing assembly 30 may also include a gear housing (not shown) for unit gearing to a particular prime mover requirement.

Shaft 204 is provided with a shoulder and a concentric distal section which has progressively smaller concentric diameter sections. Impeller 202 slides onto section of shaft 204 so that the annular end of leading edge on hub 252 abuts shoulder to present a smooth continuous surface for fluid flow. An annular locking sleeve with a proximal annular end having greater diameter than a minimal diameter of the distal annular end extending outwardly from hub bore 266 engages the annular end holding impeller 202 securely against shoulder on shaft 204. A washer and locking nut so secure the sleeve. Distal section of shaft 204 is threaded for locking nut so that standard key (not shown) and keyway combination synchronously engage impeller 202 upon shaft 204.

The bearing sleeve is inserted into the center annular portion of hub housing 252. Assembly is completed by inserting the shaft portion having the sleeve through the bearing so that clearance between hubs 252 and 243 is about 1/8 inch. Bore 266 in the nose end of stationary hub 243 provides an exit for water flushing around the exterior of the bearing. The bearing is self-lubricating, self-cooling and self-flushing, typical of bearings used in marine application.

An alternative bearing application for larger vessels is to set the bearing in the directional vanes and have the impeller positioned on the counter levered section of the shaft extending beyond the bearing housing positioned in the directional vanes support.

The shaft can also be housed in a shaft housing of a foil shape to provide minimal resistance to the intake flow supported by directional vanes in front of the impeller forming a support structure. The mass of this housing designed into the flow characteristics of the intake can provide less resistance to the intake flow than the naked shaft as it stops the effects of the rotational velocities of the shaft pre-rotating the flow to the face of the impeller.

A means for joining impeller section casing to intake housing 104 and an upper nozzle housing 401 to discharge housing nozzle 402 comprises identical ring clamps or bolt flanges which are tightened by bolts within the clamp fitting over mated flanges affixed to respective sections. The clamp typically comprises two semicircular grooved pieces attached at a hinge. Additional joining means comprise matching flange connectors as between impeller housing 251 and diffuser housing 242 utilizing flanges and diffuser casing and discharge casing utilizing flanges. A preferably rubber seal, gasket or O-ring is utilized in between. Design of propulsion system 10 is such that the steering means 28 with a housing sits centrally atop pump housing section. Sections of housing are also joined by flanges.

An outlet or discharge section 400 extending from line C--C to line E--E comprises three cylindrical sections and provides two primary functions: fluid acceleration and a means for swivelably directing the exiting stream to provide control means. Discharge section 400 incorporates complementary angles of preferably 60 degrees in order that a discharge point is horizontally aligned with bottom hull of craft 12.

The first section extending midway out from line C-C is angled cylindrical housing 291. Housing 400 comprises a swivel able portion 293 which is swivel able horizontally through 360 degrees. Swivel able second section 293 and angled section are joined by bearing assembly. Bearing assembly comprises inner race attached to the exterior surface of housing 291, outer race attached to the exterior surface of section and bearing ring there between.

Steering device 28 links the steering column in a marine vessel to rotatable section of the jet propulsion unit of the present invention. Steering linkage comprises a steering rod having a sleeve bearing and a first and second universal joint. Second universal joint mounted atop a steering rod angularly extending through the interior of housing 291 is operatively associated with rotating section by means of spoke vanes. Angle spoke vanes are designed and installed so as not to present an impediment to flow.

The third section of discharge 400 is complementary angled housing clamped to section as mentioned previously and extending out to line E--E. Housing 291 includes lower nozzle 402 and is designed to be interchangeable to enable performance guided selection of nozzle. The cross-sectional area of the steering assembly 291 in discharge section 400 is preferably proportional to the impeller inlet cross-sectional area at a ratio from about 0.25 to about 0.50:1. By adjusting the entry diameter of steering assembly 291 to accommodate the volumetric mass of the internal workings of the steering shaft, spoke vanes and flow control vanes in the flow volume, preferably at a ratio from about 0.30 to about 0.40:1 but optimally about 0.35:1, the interior surfaces of discharge nozzle are smooth and convergent onto outlet cross-sectional area.

Lower nozzle 402 includes one or more straightener vanes preferably affixed perpendicularly to the inner surface of section. Straightener vanes are designed to dampen swirl and enable a steady laminar column of water throughput to be discharged from unit 10. In addition, nozzle 402 comprises a ring attached to the outer edge of nozzle. The ring artificially enhances the propulsive reaction of the water being discharged through the nozzle 401 by means of eddies around the edges of ring to permit a smoother transition of the exiting water.

The internal flow characteristic of the upper steering nozzle 401 can accommodate the volumetric displacement of the steering shaft 501 by cross section by adjusting the shape of the upper nozzle 401. This can allow the transition of the flow off the back the back of the diffuser vanes 244 through the upper nozzle 401 to the lower nozzle 402 of the nozzle assembly to be without restriction and maintain the correct flow volume and velocities to the steering nozzle. Not doing so can create a change in the flow characteristic through the system resulting in turbulent flow with resulting back pressure. This can induce expediential pressure change in the flow to the steering nozzle resulting in the creation of turbulent flow and back pressure affecting the efficiency of the diffuser 242 which will reduce overall system efficiency and eventual system failure. By discovery the increasing of the radius of the upper nozzle 401 will reduce flow resistance and working with the changed exit radius of the diffusor/confusor to improve the efficiency of the flow through the upper nozzle 401. The increase in efficiency is directly related to the radial length of the elbow shape of the upper nozzle 401 and the improved internal flow velocities gained with the increase in radial length.

The internal flow characteristic of the steering nozzle steering bearing assembly 291 can accommodate the volumetric displacement of the steering shaft 501 and spider arms by cross section by adjusting the shape of the steering bearing assembly. This can allow the transition of the flow from the upper nozzle 401 through the bearing assembly to the lower nozzle 402 of the nozzle assembly to be without restriction and maintain the correct flow volume and velocities to the steering nozzle. Not doing so can create a change in the flow characteristic through the system resulting in turbulent flow with resulting back pressure. This can induce expediential pressure change in the flow to the steering nozzle resulting in the creation of turbulent flow and back pressure and a drop in efficiency.

The internal flow characteristic of the lower steering nozzle 402 can accommodate the volumetric displacement of guide vanes by cross section by adjusting the shape of the lower nozzle. This can allow the transition of the flow from the bearing assembly to the lower nozzle exit point to be without restriction and maintain the correct flow volume and velocities to the steering nozzle. Not doing so can create a change in the flow characteristic through the system resulting in a drop in efficiency.

The lower steering nozzle 402 guide vanes 403 can be carried up the length of the radius to incorporate the same radius as the exterior walls of the nozzle. This can provide a smoother transition for the guiding of the exiting transition of the flow through the radius of the nozzle and reduces the creation of turbulence at the radius turn of the nozzle improving flow through efficiency. The internal flow characteristic of the nozzle can accommodate any of the guide vanes by cross section adjustment to the shape of the nozzle to ensure the flow through the nozzle is uninhibited. As with the upper nozzle 401, increasing the radius of the lower steering nozzle 402 will reduce flow resistance and improve the efficiency of the flow through the lower nozzle. The increase in efficiency is directly related to the radial length of the elbow shape of the lower nozzle 402 and internal flow velocities. The interchangeability of the lower steering nozzle 402 allows for the height of the exiting efflux to be adjustable by using nozzles of differing radius length which in turn lifts or lowers the efflux exit point changing the thrust point and its effect on the vessel relative to the change in radial length of the lower steering nozzle.

The jump-up steering vane 405 in the lower nozzle 402 can aid in the tracking and better control of marine vessels with low angle dead rise hulls. The jump up steering vane 405 will retract in to the steering nozzle if it encounters any obstacles in the water whether they are animal or mineral. The lower steering nozzle housing diameter accommodates the volumetric mass of the internal workings of the jump-up steering vane 305 in the flow volume by dimension.

Discharge housing 400 also includes a bleeder hole bored approximately in line with the end of diffuser hub 243 so that trapped air introduced into unit 10 may escape and unit 10 can be self-priming. The flow from the bleeder hole can exit to the atmosphere or into the exhaust housing 500.

The control function of discharge section 400 is incorporated by the directing of nozzle thrust as provided by the steering apparatus 28. Directional headings are associated with operation of nozzle in position F, R, and radial positions in between.

The reversing bumper 700 with rubber protector 701 can be designated to protect the steering nozzle assembly 409 from damage from ramming from the rear or the when the vessel is reversing or as an anchor for towing.

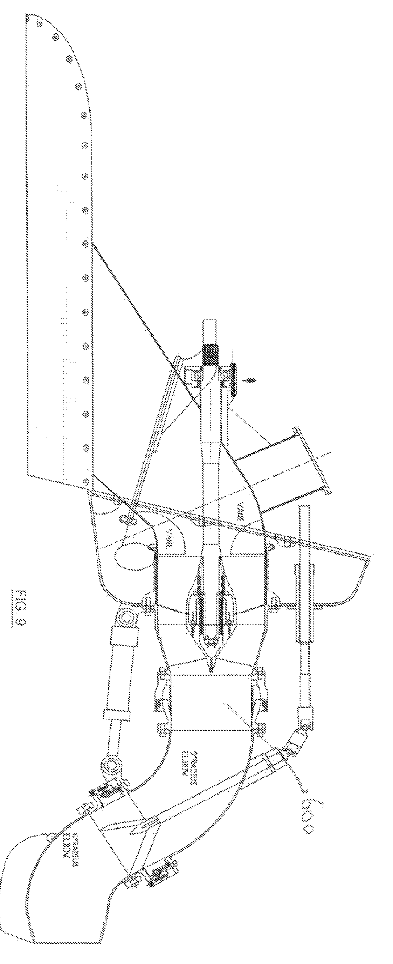

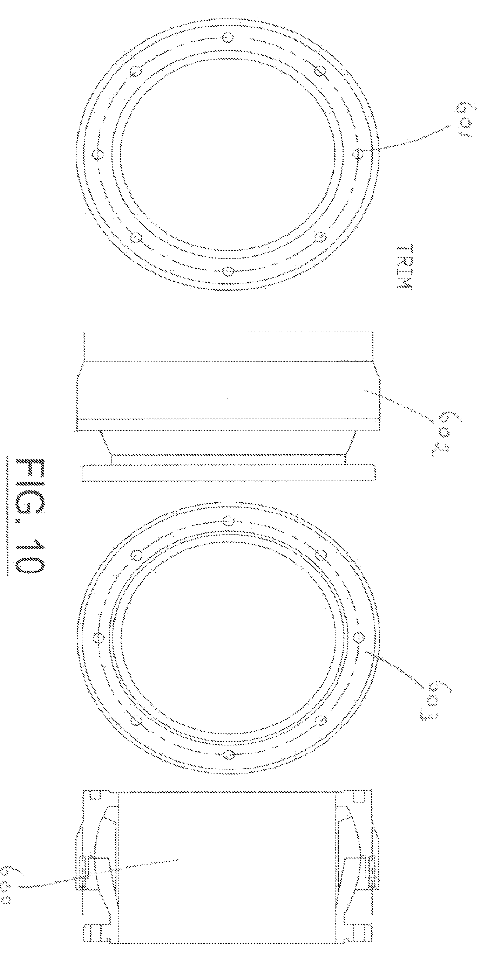

The hydraulic trim 600, incorporating hydraulic ball joint components 601, 602 and 603, as seen in Figure 9 and 10, can allow an up or down trimming of the vessel while underway without unduly affecting the flow efficiency of the drive. The available trim 600 can permit an approximately 20 degree change up or down in the positioning of the nozzle efflux. The internal flow characteristic of the hydraulic trim 600 can be parallel, and the entrance and exit flow velocities of the trim device can be as equal as possible. The trim 600 can be included with or without the exhaust shroud.

The marine jet propulsion unit 10 of the present invention is preferably fabricated and assembled from stainless steel chosen for its strength and resistance to corrosion properties, however, a non-corroding engineering aluminum or plastic having good cohesive, impact and structural strength would also be suitable for one or more parts of the propulsion unit 10.

It will be appreciated that the performance of the marine jet propulsion system 10 is dependent upon the synergistic interrelation of the function of each individual section. Each individual section must be manufactured and assembled proportionally and symmetrically with consideration given to required pressure and flow balance needed to permit the jet propulsion unit 10 to function efficiently.

Predictability of performance in regards to the power requirements of the jet propulsion unit 10 enables the unit to be fine-tuned to a particular prime mover respecting design criteria of the impeller blades, associated diffuser vanes and nozzle.

The foregoing description of the invention is illustrative and explanatory thereof. Various changes in the materials, apparatus, and particular parts employed will occur to those skilled in the art. It is intended that all such variations within the scope of the appended claims be embraced thereby.

## Claims

1. A marine ducted propeller jet propulsion apparatus comprising a propulsion system (10) comprising:
an intake section (100);
an impeller section (200) positioned downstream of the intake section (100),
a discharge section (400) positioned downstream of the impeller section (200), the discharge section (400) comprising a steering nozzle assembly;
a passage (102)(110)(122) extending from an intake opening (106) of the intake section (100) formed in a bottom surface of a hull at one end to an outlet of the steering nozzle assembly at the other end;
a mass of the internal working parts of the propulsion system being accommodated within the passage;
whereby the passage has an axial cross-sectional area, the axial cross-sectional area of the passage being adjusted throughout the passage by increasing the external dimensions accordingly and/or by increasing the radius of the axial cross-sectional area to accommodate for a volumetric mass of the internal working parts so that the passage is capable of converging a passing water mass on a volumetric basis while maintaining a solid state character of the passing water mass as the passing water mass is driven through the passage from the intake opening (106) of the intake section (100) to the outlet of the steering nozzle assembly,
whereby, in use, the axial cross-sectional flow area substantially and regularly decreases from the inlet to the outlet without resistance of the mass of the internal working representing a restriction or obstruction to the flow,
**characterized in that**,
the impeller section (200) comprising an impeller housing (251), comprising an interchangeable blade assembly impeller (202), said interchangeable blade assembly impeller (202) comprising an impeller hub (252) and impeller blades (250),wherein the impeller blades (250) are fixed along an outwardly tapered convex surface of the impeller hub (252) ,said interchangeable blade assembly impeller (202) being suitable for allowing the changing of the individual impeller blades (250) on the interchangeable blade assembly impeller (202) if damaged, and suitable for allowing the changing of the pitch of the impeller blades (250) for different applications,the impeller section (200) comprising a diffuser/ confusor housing (242), said diffuser/confusor housing (242) comprising an interchangeable diffuser/confusor blade component (245), leading edge blades (244) and diffuser vanes (244a),said interchangeable diffuser/confusor blade component (245) being suitable for allowing the changing of leading edge blades to the diffuser (242) so to replace such leading edge blades if damaged, and for allowing the changing of the pitch of the leading edge of the diffuser vanes (244a) to meet the needs of the trailing edge velocities of the interchangeable blade assembly impeller (202).

2. Marine ducted propeller jet propulsion apparatus of claim 1, wherein the intake section (100) defines an intake passage (102) in a inlet housing (104) communicating between the intake opening (106) at one end and an impeller intake (203) to the impeller section (200) at the other end,
wherein, situated along intake walls of inlet housing (104) in front of the interchangeable blade assembly impeller (202) is a straight tube section (211) of a minimum length equal to 20% of the impeller blade width adjusted to accommodate the volumetric mass of the internal working parts within its parameters where the flow with one or more straightener vanes (208) is induced to flow in a solid state to the face of the interchangeable blade assembly impeller (202).

3. Marine ducted propeller jet propulsion apparatus of claim 1, comprising an impeller intake (203) wherein the cross-sectional area of intake (203) is adjusted to include the volumetric insertion in the flow of the mass of a drive shaft (204), straightener vanes (206) and directional or pre-swirl vanes (208) by increasing the external dimensions accordingly.

4. Marine ducted propeller jet propulsion apparatus of claim 1, wherein the steering nozzle assembly comprises an upper nozzle (401) and a lower nozzle (402) and wherein the radius of the upper nozzle (401) is increased to reduce flow resistance.

5. Marine ducted propeller jet propulsion apparatus according to any of the claims from 1 to 3, wherein the steering nozzle assembly comprises an upper nozzle (401) and a lower nozzle (402) and wherein the radius of the lower nozzle (402) is increased to reduce flow resistance.

6. Marine ducted propeller jet propulsion apparatus of claim 1, wherein the internal working parts include an impeller intake (203), a drive shaft (204), guide vanes (206) and directional vanes (208);
a diffuser/confusor hub (243); a steering shaft (501) with positioning vanes; spoke vanes, flow control vanes, flow straightener vanes.

7. Marine ducted propeller jet propulsion apparatus of claim 1, further comprising:
an increased exit radius (246), the increased exit radius (246) being introduced at a transition point between the diffuser/confusor housing (242) and an upper steering nozzle (401) of the steering nozzle assembly thereby allowing for a less angular transition from the diffuser/confusor housing to an upper portion of the steering nozzle.

8. Marine ducted propeller propulsion apparatus of claim 1, wherein a lower steering nozzle (402) of the steering nozzle assembly is interchangeable to enable adjustments to the steering nozzle.

9. Marine ducted propeller propulsion apparatus of claim 1, wherein a lower steering nozzle (402) of the steering nozzle assembly includes a steering vane, the steering vane being retractable and aiding in the tracking and better control of a marine vessel.

10. Marine ducted propeller propulsion apparatus of claim 8 and 9, wherein the lower steering nozzle (402) is removably attached to an end of the upper steering nozzle (401).

11. Marine ducted propeller propulsion apparatus of claim 10, further comprising:
straightener vanes, the straightener vanes being affixed perpendicularly to the inner surface of section the lower nozzle to dampen swirl and enable a steady laminar column of water throughput to be discharged.

12. Marine ducted propeller jet propulsion apparatus according to any of the previous claims, comprising an hydraulic trim (600), incorporating hydraulic ball joint components (601, 602 and 603), suitable for up or down trimming of a vessel while underway without unduly affecting the flow efficiency of the drive.

13. Marine ducted propeller jet propulsion apparatus according to claim 1, wherein the intake section (100) defines an intake passage (102) in a inlet housing (104) communicating between the intake opening (106) at one end and an impeller intake (203) to the impeller section (200) at the other end,
wherein a bypass valve assembly (not shown) is suitable for being fitted in the inlet housing (104) near the inlet (203), the bypass valve being suitable for being set to the desired pressure release by pressure sensors attached to the side of the housing 104.

## Patentansprüche

1. Schiffskortdüsen-Strahlantriebsvorrichtung umfassend ein Antriebssystem (10), umfassend:
einen Einlassabschnitt (100);
einen Laufradabschnitt (200), der stromabwärts des Einlassabschnitts (100) positioniert ist,
einen Auslassabschnitt (400), der stromabwärts des Laufradabschnitts (200) positioniert ist, wobei der Auslassabschnitt (400) eine Steuer- bzw. Lenkdüsenanordnung umfasst;
einen Durchgang (102) (110) (122), der sich von einer Einlassöffnung (106) des Einlassabschnitts (100), die in einer Bodenfläche eines Rumpfs an einem Ende ausgebildet ist, zu einem Auslass der Lenkdüsenanordnung an dem anderen Ende erstreckt;
wobei eine Masse der internen Arbeitsteile des Antriebssystems innerhalb des Durchgangs untergebracht ist;
wodurch der Durchgang eine axiale Querschnittsfläche aufweist, wobei die axiale Querschnittsfläche des Durchgangs über den gesamten Durchgang hinweg angepasst wird, indem die Außenabmessungen entsprechend vergrößert werden und/oder indem der Radius der axialen Querschnittsfläche vergrößert wird, um eine Volumenmasse der internen Arbeitsteile aufzunehmen, so dass der Durchlass in der Lage ist, eine durchströmende Wassermasse auf einer volumetrischen Basis zusammenlaufen zu lassen, während ein Festkörpercharakter der durchströmenden Wassermasse beibehalten wird, wenn die durchströmende Wassermasse durch den Durchgang von der Einlassöffnung (106) des Einlassabschnitts (100) zu dem Auslass der Lenkdüsenanordnung getrieben wird,
wodurch im Gebrauch die axiale Querschnittsströmungsfläche im Wesentlichen und regelmäßig von dem Einlass zu dem Auslass abnimmt, ohne dass ein Widerstand der Masse der internen Arbeit eine Beschränkung oder ein Hindernis für die Strömung darstellt,
**dadurch gekennzeichnet, dass** der Laufradabschnitt (200) ein Laufradgehäuse (251) umfasst, das ein Laufrad (202) mit austauschbarer Schaufelanordnung umfasst, wobei das Laufrad (202) mit austauschbarer Schaufelanordnung eine Laufradnabe (252) und Laufradschaufeln (250) umfasst, wobei die Laufradschaufeln (250) entlang einer sich nach außen verjüngten konvexen Fläche bzw. Oberfläche der Laufradnabe (252) befestigt sind, wobei das Laufrad (202) mit austauschbarer Schaufelanordnung geeignet ist, das Wechseln der einzelnen Laufradschaufeln (250) an dem Laufrad (202) mit austauschbarer Schaufelanordnung zu ermöglichen, wenn sie beschädigt sind, und geeignet ist, das Ändern des Abstands bzw. der Teilung der Laufradschaufeln (250) für unterschiedliche Anwendungen zu ermöglichen, wobei der Laufradabschnitt (200) ein Diffusor-/Konfusorgehäuse (242) umfasst, wobei das Diffusor-/Konfusorgehäuse (242) eine austauschbare Diffusor-/Konfusorschaufelkomponente (245), Anström- bzw. Vorderkantenschaufeln (244) und Diffusorflügel bzw. -schaufeln (244a) umfasst, wobei die austauschbare Diffusor-/Konfusorblattkomponente (245) geeignet ist, das Wechseln von Vorderkantenschaufeln zu dem Diffusor (242) zu ermöglichen, um solche Vorderkantenschaufeln zu ersetzen, wenn sie beschädigt sind, und um das Ändern des Abstands bzw. der Teilung der Vorderkante der Diffusorschaufeln (244a) zu ermöglichen, um die Anforderungen der Abström- bzw. Hinterkantengeschwindigkeiten des Laufrads (202) mit austauschbarer Schaufelanordnung zu erfüllen.

2. Schiffskortdüsen-Strahlantriebsvorrichtung nach Anspruch 1, wobei der Einlassabschnitt (100) einen Einlassdurchgang (102) in einem Einlassgehäuse (104) definiert, der zwischen der Einlassöffnung (106) an einem Ende und einem Laufradeinlass (203) zu dem Laufradabschnitt (200) an dem anderen Ende kommuniziert bzw. verbindet,
wobei entlang der Einlasswände des Einlassgehäuses (104) vor dem Laufrad (202) mit austauschbarer Schaufelanordnung ein gerader Rohrabschnitt (211) mit einer Mindestlänge von gleich 20 % der Laufradschaufelbreite angeordnet ist, der angepasst ist, die Volumenmasse der internen Arbeitsteile innerhalb seiner Parameter aufzunehmen, wo die Strömung mit einer oder mehreren Gleichrichterschaufeln bzw. -flügeln (208) veranlasst wird, in einem festen Zustand zu der Fläche bzw. Stirn des Laufrads (202) mit austauschbarer Schaufelanordnung zu strömen.

3. Schiffskortdüsen-Strahlantriebsvorrichtung nach Anspruch 1, umfassend einen Laufradeinlass (203), wobei die Querschnittsfläche des Einlasses (203) angepasst ist, die volumetrische Einfügung in die Strömung der Masse einer Antriebswelle (204), von Gleichrichtschaufeln (206) und Richtungs- oder Vordrallschaufeln (208) durch entsprechende Vergrößerung der Außenabmessungen einzuschließen.

4. Schiffskortdüsen-Strahlantriebsvorrichtung nach Anspruch 1, wobei die Lenkdüsenanordnung eine obere Düse (401) und eine untere Düse (402) umfasst und wobei der Radius der oberen Düse (401) vergrößert ist, um den Strömungswiderstand zu verringern.

5. Schiffskortdüsen-Strahlantriebsvorrichtung nach einem der Ansprüche 1 bis 3, wobei die Lenkdüsenanordnung eine obere Düse (401) und eine untere Düse (402) umfasst und wobei der Radius der unteren Düse (402) vergrößert ist, um den Strömungswiderstand zu verringern.

6. Schiffskortdüsen-Strahlantriebsvorrichtung nach Anspruch 1, wobei die internen Arbeitsteile enthalten: einen Laufradeinlass (203), eine Antriebswelle (204), Leitschaufeln (206) und Richtungsschaufeln (208);
eine Diffusor-/Konfusornabe (243); eine Lenkwelle (501) mit Positionierungsflügeln bzw. -schaufeln; Speichenflügeln bzw. -schaufeln, Strömungssteuer- bzw. -regelflügel bzw. -schaufeln, Strömungsbegradigungsflügel bzw. -schaufeln.

7. Schiffskortdüsen-Strahlantriebsvorrichtung nach Anspruch 1, ferner umfassend:
einen vergrößerten Austrittsradius (246), wobei der vergrößerte Austrittsradius (246) an einem Übergangspunkt zwischen dem Diffusor/Konfusorgehäuse (242) und einer oberen Steuer- bzw. Lenkdüse (401) der Lenkdüsenanordnung eingeführt ist, wodurch ein weniger winkliger Übergang von dem Diffusor/Konfusorgehäuse zu einem oberen Abschnitt der Lenkdüse ermöglicht wird.

8. Schiffskortdüsen-Strahlantriebsvorrichtung nach Anspruch 1, wobei eine untere Lenkdüse (402) der Lenkdüsenanordnung austauschbar ist, um Einstellungen an der Lenkdüse zu ermöglichen.

9. Schiffskortdüsen-Strahlantriebsvorrichtung nach Anspruch 1, wobei eine untere Lenkdüse (402) der Lenkdüsenanordnung einen Steuer- bzw. Lenkflügel bzw. -schaufel aufweist, wobei der Steuerflügel einziehbar ist und bei der Nachverfolgung und besseren Steuerung eines Seeschiffs hilft.

10. Schiffskortdüsen-Strahlantriebsvorrichtung nach Anspruch 8 und 9, wobei die untere Lenkdüse (402) entfernbar an einem Ende der oberen Lenkdüse (401) angebracht ist.

11. Schiffskortdüsen-Strahlantriebsvorrichtung nach Anspruch 10, ferner umfassend:
Gleichrichterflügel bzw. -schaufeln, wobei die Gleichrichterschaufeln senkrecht zu der Innenfläche des Abschnitts der unteren Düse befestigt sind, um Drall zu dämpfen und zu ermöglichen, dass eine stetige laminare Säule des Wasserdurchsatzes ausgestoßen wird.

12. Schiffskortdüsen-Strahlantriebsvorrichtung nach einem der vorhergehenden Ansprüche, umfassend einen hydraulische Trimm (600), der hydraulische Kugelgelenkkomponenten (601, 602 und 603) enthält, geeignet zum Aufwärts- oder Abwärtstrimmen eines Schiffs während der Fahrt, ohne die Strömungseffizienz des Antriebs übermäßig zu beeinträchtigen.

13. Schiffskortdüsen-Strahlantriebsvorrichtung nach Anspruch 1, wobei der Einlassabschnitt (100) einen Einlassdurchgang (102) in einem Einlassgehäuse (104) definiert, der zwischen der Einlassöffnung (106) an einem Ende und einem Laufradeinlass (203) zu dem Laufradabschnitt (200) an dem anderen Ende kommuniziert bzw. verbindet,
wobei eine Bypassventilanordnung (nicht gezeigt) geeignet ist, in das Einlassgehäuse (104) in der Nähe des Einlasses (203) eingepasst zu werden, wobei das Bypassventil geeignet ist, durch an der Seite des Gehäuses 104 angebrachte Drucksensoren auf die gewünschte Druckentlastung eingestellt zu werden.

## Revendications

1. Appareil marin de propulsion par réaction à hélice à conduit comprenant un système de propulsion (10) comprenant :
une section d'admission (100) ;
une section d'hélice (200) positionnée en aval de la section d'admission (100),
une section d'évacuation (400) positionnée en aval de la section d'hélice (200), la section d'évacuation (400) comprenant un ensemble de tuyères de direction ;
un passage (102) (110) (122) s'étendant à partir d'une ouverture d'admission (106) de la section d'admission (100) formée dans une surface inférieure d'une coque au niveau d'une extrémité vers une sortie de l'ensemble de tuyères de direction au niveau de l'autre extrémité ;
une masse des parties de fonctionnement internes du système de propulsion étant reçue dans le passage ;
dans lequel le passage présente une superficie de section transversale axiale, la superficie de section transversale axiale du passage étant ajustée dans tout le passage par augmentation des dimensions externes en conséquence et/ou par augmentation du rayon de la superficie de section transversale axiale pour recevoir une masse volumétrique des parties de fonctionnement internes de sorte que le passage est apte à faire converger une masse d'eau passante sur une base volumétrique tout en maintenant un caractère d'état solide de la masse d'eau passante à mesure que la masse d'eau passante est entraînée à travers le passage à partir de l'ouverture d'admission (106) de la section d'admission (100) vers la sortie de l'ensemble de tuyères de direction,
dans lequel, lors de l'utilisation, la superficie d'écoulement de section transversale axiale diminue sensiblement et régulièrement à partir de l'entrée vers la sortie sans résistance de la masse du fonctionnement interne représentant une restriction ou obstruction par rapport à l'écoulement,
**caractérisé en ce que**
la section d'hélice (200) comprenant un carter d'hélice (251), comprenant une hélice à ensemble de pale interchangeable (202), ladite hélice à ensemble de pale interchangeable (202) comprenant un moyeu d'hélice (252) et des pales d'hélice (250), dans lequel les pales d'hélice (250) sont fixées le long d'une surface convexe effilée vers l'extérieur du moyeu d'hélice (252), ladite hélice à ensemble de pale interchangeable (202) étant adaptée pour permettre le changement des pales d'hélice (250) individuelles sur l'hélice à ensemble de pale interchangeable (202) si elles sont endommagées, et adaptée pour permettre le changement du pas des pales d'hélice (250) pour différentes applications, la section d'hélice (200) comprenant un carter de diffuseur/confuseur (242), ledit carter de diffuseur/confuseur (242) comprenant un composant de pale de diffuseur/confuseur interchangeable (245), des pales de bord d'attaque (244) et des aubes de diffuseur (244a), ledit composant de pale de diffuseur/confuseur interchangeable (245) étant adapté pour permettre le changement de pales de bord d'attaque sur le diffuseur (242) de manière à remplacer de telles pales de bord d'attaque si elles sont endommagées, et pour permettre le changement du pas du bord d'attaque des aubes de diffuseur (244a) pour répondre aux besoins des vitesses de bord de fuite de l'hélice à ensemble de pale interchangeable (202).

2. Appareil marin de propulsion par réaction à hélice à conduit selon la revendication 1, dans lequel la section d'admission (100) définit un passage d'admission (102) dans un carter d'entrée (104) communiquant entre l'ouverture d'admission (106) au niveau d'une extrémité et une admission d'hélice (203) vers la section d'hélice (200) au niveau de l'autre extrémité,
dans lequel, située le long de parois d'admission du carter d'entrée (104) devant l'hélice à ensemble de pale interchangeable (202), se trouve une section de tube rectiligne (211) d'une longueur minimale égale à 20 % de la largeur de pale d'hélice ajustée pour recevoir la masse volumétrique des parties de fonctionnement internes dans ses paramètres où l'écoulement avec une ou plusieurs aubes de redressement (208) est amené à s'écouler dans un état solide vers la face de l'hélice à ensemble de pale interchangeable (202) est.

3. Appareil marin de propulsion par réaction à hélice à conduit selon la revendication 1, comprenant une admission d'hélice (203) dans lequel la superficie de section transversale de l'admission (203) est ajustée pour comporter l'insertion volumétrique dans l'écoulement de la masse d'un arbre d'entraînement (204), des aubes de redressement (206) et des aubes directionnelles ou pré-tourbillonnaires (208) par augmentation des dimensions externes en conséquence.

4. Appareil marin de propulsion par réaction à hélice à conduit, dans lequel l'ensemble de tuyères de direction comprend une tuyère supérieure (401) et une tuyère inférieure (402) et dans lequel le rayon de la tuyère supérieure (401) est augmenté pour réduire la résistance à l'écoulement.

5. Appareil marin de propulsion par réaction à hélice à conduit selon l'une quelconque des revendications 1 à 3, dans lequel l'ensemble de tuyères de direction comprend une tuyère supérieure (401) et une tuyère inférieure (402) et dans lequel le rayon de la tuyère inférieure (402) est augmenté pour réduire la résistance à l'écoulement.

6. Appareil marin de propulsion par réaction à hélice à conduit selon la revendication 1, dans lequel les parties de fonctionnement internes comportent une admission d'hélice (203), un arbre d'entraînement (204), des aubes de guidage (206) et des aubes directionnelles (208) ;
un moyeu de diffuseur/confuseur (243) ; un arbre de direction (501) avec des aubes de positionnement ; des aubes à rayon, des aubes de commande d'écoulement, des aubes de redressement d'écoulement.

7. Appareil marin de propulsion par réaction à hélice à conduit selon la revendication 1, comprenant en outre :
un rayon de sortie augmenté (246), le rayon de sortie augmenté (246) étant introduit au niveau d'un point de transition entre le carter de diffuseur/confuseur (242) et une tuyère de direction supérieure (401) de l'ensemble de tuyères de direction permettant ainsi une transition moins angulaire à partir du carter de diffuseur/confuseur vers une portion supérieure de la tuyère de direction.

8. Appareil marin de propulsion par réaction à hélice à conduit selon la revendication 1, dans lequel une tuyère de direction inférieure (402) de l'ensemble de tuyères de direction est interchangeable pour autoriser des ajustements sur la tuyère de direction.

9. Appareil marin de propulsion par réaction à hélice à conduit selon la revendication 1, dans lequel une tuyère de direction inférieure (402) de l'ensemble de tuyères de direction comporte une aube de direction, l'aube de direction étant rétractable et aidant au suivi et à une meilleure commande d'un véhicule marin.

10. Appareil marin de propulsion par réaction à hélice à conduit selon la revendication 8 et 9, dans lequel la tuyère de direction inférieure (402) est fixée de manière amovible à une extrémité de la tuyère de direction supérieure (401).

11. Appareil marin de propulsion par réaction à hélice à conduit selon la revendication 10, comprenant en outre :
des aubes de redressement, les aubes de redressement étant fixées perpendiculairement à la surface de section intérieure la tuyère inférieure pour amortir un tourbillon et autoriser qu'un débit de colonne d'eau laminaire stationnaire soit évacué.

12. Appareil marin de propulsion par réaction à hélice à conduit selon l'une quelconque des revendications précédentes, comprenant une assiette hydraulique (600), incorporant des composants de joint à rotule hydraulique (601, 602 et 603), adaptés pour l'équilibrage vers le haut ou vers le bas d'un navire en route sans affecter excessivement l'efficacité d'écoulement de l'entraînement.

13. Appareil marin de propulsion par réaction à hélice à conduit selon la revendication 1, dans lequel la section d'admission (100) définit un passage d'admission (102) dans un carter d'entrée (104) communiquant entre l'ouverture d'admission (106) au niveau d'une extrémité et une admission d'hélice (203) vers la section d'hélice (200) au niveau de l'autre extrémité,
dans lequel un ensemble de vanne de dérivation (non illustré) est adapté pour être monté dans le carter d'entrée (104) à proximité de l'entrée (203), la vanne de dérivation étant adaptée pour être réglée sur la libération de pression souhaitée par des capteurs de pression fixés au côté du carter 104.
